# EUROPEAN PATENT APPLICATION

(11) **EP 4 574 383 A1**
(43) Date of publication of application: **25.06.2025**
(21) Application number: 23854811.9
(22) Date of filing: 04.08.2023
(51) Int. Cl.: B29C 39/10, F16J 15/00, F16J 15/10, F16J 15/14, H01L 21/027

(54) **GASKET FORMING METHOD, GASKET FORMING MOLD, AND GASKET FORMING DEVICE**

(30) Priority: 19.08.2022 JP 2022131383
(71) Applicant: ThreeBond Co., Ltd., Tokyo 192-0398 (JP)
(72) Inventor: KADO, Takuma, Hachioji-shi Tokyo 192-0398 (JP); HASHIGUCHI, Shinpei, Hachioji-shi Tokyo 192-0398 (JP); KIBE, Hajime, Hachioji-shi Tokyo 192-0398 (JP); TAKAHASHI, Toshiyuki, Hachioji-shi Tokyo 192-0398 (JP)
(74) Representative: Haseltine Lake Kempner LLP
(86) International application number: PCT/JP2023/028561
(87) International publication number: WO 2024/038776

(57) **Abstract**

The present invention is a gasket forming method for forming a gasket on a workpiece. The method comprises, in the following order, an application step for applying an activated energy beam-curing liquid on a cavity (41) of a transparent forming mold (40), an adhering step for adhering the forming mold (40), to which the activated energy beam-curing liquid has been applied, and a workpiece to each other, a curing step for curing the applied activated energy beam-curing liquid by radiating activated energy beams, and a mold release step for releasing the cured activated energy beam-curing liquid, together with the workpiece, from the forming mold (40). In the adhering step, when the workpiece and the forming mold (40) have been adhered to each other via the activated energy beam-curing liquid, some of the activated energy beam-curing liquid or gas is discharged, to the atmosphere, from a communication path (44) that is in communication with the cavity (41). As a result thereof, it is possible to reduce a releasing force for releasing the gasket from the forming mold and to uniform the dimensional precision of the gasket.

## Description

### Technical Field

The present invention relates to a gasket forming method, a gasket forming mold, and a gasket forming device.

### Background Art

A gasket is known as a component for sealing the space between two parts. Typically, such gaskets are manufactured by injection molding, where a mold with a cavity of the desired shape is filled with a molding resin, such as a thermoplastic resin.

On the other hand, for example, Patent Document 1 discloses another method for molding a gasket, in which a molding resin is applied to a workpiece in advance, then pressed from above with a forming mold having a cavity of the desired shape, and subsequently cured, thereby forming a gasket on the workpiece.

### Prior Art Document

### Patent Document

Patent Document 1: Japanese Patent Application Publication No. 2017-015240

### Summary of the Invention

### Problems to be Solved by the Invention

In the gasket molding method described in Patent Document 1, the molding resin is applied to the workpiece and then pressed with the forming mold. Consequently, some of the molding resin overflows from the cavity and partially penetrates between the workpiece and the molding/bonding surface of the forming mold, which may increase the height of the gasket by the thickness of the resin or cause a deficiency of the molding resin in other areas. This results in a decrease in overall dimensional accuracy, leading to variations between products. In addition, when the molding resin penetrates between the workpiece and the molding/bonding surface of the forming mold, a greater demolding force may be required.

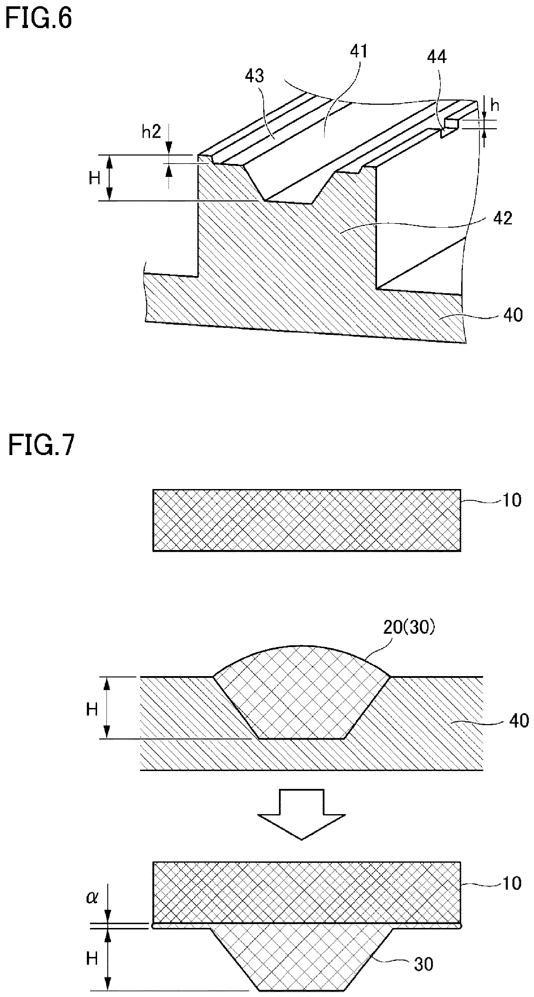

Even if the molding resin is applied to the cavity of the forming mold, and the forming mold and the workpiece are then bonded together, the molding resin may still overflow from the cavity and penetrate between the workpiece and the molding/bonding surface of the forming mold, resulting in the same phenomenon as described above (see FIG. 7). In FIG. 7, the reference letter H represents the design height of the gasket, while the reference letter α indicates the increase in the height of the gasket due to the molding resin that has penetrated between the workpiece and the forming mold.

The present invention has been made in view of the above disadvantages, and an object of the invention is to provide a gasket forming method, a gasket forming mold, and a gasket forming device capable of reducing the demolding force required to remove a gasket from the forming mold. Another object of the invention is to provide a gasket forming method, a gasket forming mold, and a gasket forming device that can achieve uniform dimensional accuracy of gaskets.

### Means for Solving the Problems

(1) According to an aspect of the invention, there is provided a gasket forming method for forming a gasket on a workpiece. The method includes, in the order recited: an application step of applying an active energy ray curable liquid to an annular cavity of a transparent forming mold; a bonding step of bonding the forming mold coated with the active energy ray curable liquid and the workpiece; a curing step of curing the applied active energy ray curable liquid by irradiation with an active energy ray; and a demolding step of removing the cured active energy ray curable liquid from the forming mold together with the workpiece. In the bonding step, when the workpiece and the forming mold are bonded together through the active energy ray curable liquid, a portion of the active energy ray curable liquid or gas is discharged into the atmosphere from a communication passage that is in communication with the cavity.
(2) In the above aspect (1), the forming mold may include a clearance groove that is closed together with the cavity when the workpiece and the forming mold are bonded together through the active energy ray curable liquid. The clearance groove may have a width greater than that of the cavity and a depth smaller than that of the cavity. The clearance groove may be in communication with the open end side of the cavity.
(3) According to another aspect of the invention, there is provided a gasket forming method for forming a gasket on a workpiece. The method includes, in the order recited: an application step of applying an active energy ray curable liquid to an annular cavity of a transparent forming mold; a bonding step of bonding the forming mold coated with the active energy ray curable liquid and the workpiece; a curing step of curing the applied active energy ray curable liquid by irradiation with an active energy ray; and a demolding step of removing the cured active energy ray curable liquid from the forming mold together with the workpiece. The forming mold includes a clearance groove that is closed together with the cavity when the workpiece and the forming mold are bonded together through the active energy ray curable liquid. The clearance groove has a width greater than that of the cavity and a depth smaller than that of the cavity. The clearance groove is in communication with the open end side of the cavity.
(4) In any one of the above aspects (1) to (3), the cavity may be located in a protruding portion that protrudes in the normal direction of the molding/bonding surface of the forming mold relative to the annular inner and outer regions.
(5) In any one of the above aspects (1) to (4), the application step may be performed using a dispenser.
(6) In any one of the above aspects (1) to (5), the cavity may be coated with a release coating.
(7) According to still another aspect of the invention, there is provided a gasket forming mold configured to form a gasket on a workpiece by applying, curing, and transferring an active energy ray curable liquid. The mold includes: a molding surface; a cavity that is annularly closed according to the shape of the gasket, wherein the cavity is located on the molding surface and can be filled with the active energy ray curable liquid; and a communication passage that is in communication with the cavity and the atmosphere, wherein the communication passage allows a portion of the active energy ray curable liquid or gas to be discharged therefrom when the workpiece and the forming mold are bonded together through the active energy ray curable liquid.
(8) In the above aspect (7), the gasket forming mold may further include a clearance groove having a width greater than that of the cavity and a depth smaller than that of the cavity. The clearance groove may be in communication with the open end side of the cavity. The clearance groove may be closed together with the cavity when the workpiece and the molding surface are bonded together through the active energy ray curable liquid.
(9) According to still another aspect of the invention, there is provided a gasket forming mold configured to form a gasket on a workpiece by applying, curing, and transferring an active energy ray curable liquid. The mold includes: a molding/bonding surface; a cavity that is annularly closed according to the shape of the gasket, wherein the cavity is located on the molding/bonding surface and can be filled with the active energy ray curable liquid; and a clearance groove that is closed together with the cavity when the workpiece and the forming mold are bonded together through the active energy ray curable liquid. The clearance groove has a width greater than that of the cavity and a depth smaller than that of the cavity. The clearance groove is in communication with the open end side of the cavity.
(10) In any one of the above aspects (7) to (9), the cavity may be located in a protruding portion that protrudes in the normal direction of the molding surface relative to the annular inner and outer regions.
(11) In any one of the above aspects (7) to (10), the cavity may be coated with a release coating.
(12) According to still another aspect of the invention, there is provided a gasket forming device including: an application device that ejects an active energy ray curable liquid using a dispenser; a bonding device that includes a transparent forming mold and bonds a workpiece to the forming mold; a drive device that moves the forming mold and the dispenser relative to each other; and an active energy ray irradiation device that irradiates the active energy ray curable liquid with an active energy ray. The forming mold includes: a molding/bonding surface; a cavity that is annularly closed according to the shape of a gasket, wherein the cavity is located on the molding/bonding surface and can be filled with the active energy ray curable liquid; and a communication passage that is in communication with the cavity and the atmosphere, wherein the communication passage allows a portion of the active energy ray curable liquid or gas to be discharged therefrom when the workpiece and the molding/bonding surface are bonded together through the active energy ray curable liquid.
(13) According to still another aspect of the invention, there is provided a gasket forming device including: an application device that ejects an active energy ray curable liquid using a dispenser; a bonding device that includes a transparent forming mold and bonds a workpiece to the forming mold; a drive device that moves the forming mold and the dispenser relative to each other; and an active energy ray irradiation device that irradiates the active energy ray curable liquid with an active energy ray. The forming mold includes: a molding/bonding surface; a cavity that is annularly closed according to the shape of a gasket, wherein the cavity is located on the molding/bonding surface and can be filled with the active energy ray curable liquid; and a clearance groove that is closed together with the cavity when the workpiece and the forming mold are bonded together through the active energy ray curable liquid. The clearance groove has a width greater than that of the cavity and a depth smaller than that of the cavity. The clearance groove is in communication with the open end side of the cavity.

### Effects of the Invention

According to the aspects of the invention, it is possible to provide a gasket forming method, a gasket forming mold, and a gasket forming device capable of reducing the demolding force required to remove a gasket from the forming mold. It is also possible to provide a gasket forming method, a gasket forming mold, and a gasket forming device that can achieve uniform dimensional accuracy of gaskets.

### Brief Description of the Drawings

[FIG. 1] FIG. 1 is a schematic plan view of a workpiece in which a gasket is molded.
[FIG. 2A] FIG. 2A is a flowchart illustrating a gasket forming method according to an embodiment of the invention.
[FIG. 2B] FIG. 2B is a diagram illustrating the operation of the gasket forming method according to the embodiment of the invention.
[FIG. 3A] FIG. 3A is a schematic perspective view of a forming mold according to an embodiment of the invention.
[FIG. 3B] FIG. 3B is an enlarged cross-sectional perspective view of an area A in FIG. 3A.
[FIG. 4] FIG. 4 is a schematic cross-sectional view of a fuel cell.
[FIG. 5] FIG. 5 is a flowchart illustrating a sealing method for sealing between two components.
[FIG. 6] FIG. 6 is a cross-sectional perspective view of a forming mold according to a modified embodiment of the invention.
[FIG. 7] FIG. 7 is a schematic cross-sectional view of a gasket molded by a conventional forming mold.

### Modes for Carrying Out the Invention

Exemplary embodiments of the invention will be described in detail below with reference to the accompanying drawings. Note that like parts are designated by like reference numerals or characters throughout the description of the embodiments.

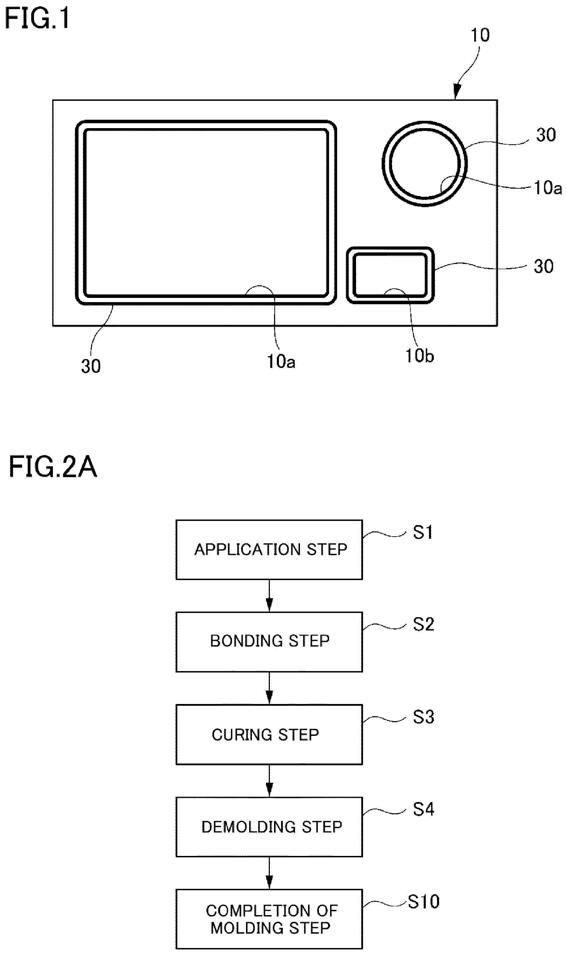

Before describing a gasket forming method according to an embodiment of the invention, a brief overview will be given of a workpiece 10 in which a gasket 30 is molded. FIG. 1 is a schematic plan view of the workpiece 10 in which the gasket 30 is molded.

The workpiece 10 is one or the other of two components assembled together through the gasket 30 and is of the desired size and shape. For example, the workpiece 10 may be made of metal such as iron, aluminum, stainless steel, magnesium, and titanium; carbon; or resin such as polyvinyl chloride, polyethylene naphthalate, polyethylene terephthalate, polyethylene, polypropylene, and polycarbonate. In this embodiment, the workpiece 10 is in the form of a rectangular plate.

The workpiece 10 has one or more openings 10a and/or one or more recesses 10b formed therein. The gasket 30 is formed around the openings 10a and/or the recesses 10b. The molding surface of the workpiece 10 for forming the gasket 30 is preferably flat; however, it may also have a gently inclined surface portion.

It should be noted that the workpiece 10 need not necessarily have the openings 10a and the recesses 10b; instead, the other component may have the openings 10a and the recesses 10b.

Next, a gasket forming device used in the gasket forming method of the embodiment will be briefly described.

The gasket forming device mainly includes an application device, a bonding device, an XYZ-axis drive device, an active energy ray irradiation device 60, a demolding device, and a control device.

The application device is capable of applying a liquid to an object to be coated. The application device may be, for example, a dispenser, a spray device, or a device used for application in inkjet printing, screen printing, gravure printing, and the like. Among these, a dispenser is preferred. The application device of this embodiment includes a dispenser 50 that ejects a liquid from a nozzle toward an object to be coated, a tank or syringe that stores the liquid, and a pump that supplies the liquid. The application device may also include a rotation mechanism that allows the nozzle to rotate about the Z-axis.

The bonding device may be of the clamshell type having a fixed table for holding one of the objects to be bonded (forming mold 40), a movable table for holding the other of the objects to be bonded (workpiece 10), and a reversing drive unit configured to move the movable table reversely toward and away from the fixed table. However, the structure of the bonding device is not limited to the clamshell type.

The bonding device further includes an imaging device, such as a CCD camera, for capturing images of the objects to be bonded so that the position, inclination, and the like of the objects can be checked during the bonding process. The bonding device is also used as the demolding device for separating the bonded objects. However, the demolding device and the bonding device may be provided as independent units.

The XYZ-axis drive device includes an X-axis moving unit that moves the dispenser 50 in the horizontal direction (left/right), a Y-axis moving unit that moves the dispenser 50 in the front-rear direction, and a Z-axis moving unit that moves the dispenser 50 in the vertical direction (up/down). Note that the XYZ-axis drive device may have any configuration as long as it can move the dispenser 50 along the three-dimensional XYZ axes relative to an object to be coated. For example, the XYZ-axis drive device may include an XY table that holds the dispenser 50 and a Z table that holds an object to be coated.

The active energy ray irradiation device 60 is designed to irradiate light such as electron beams or ultraviolet (UV) rays with wavelengths of about 320 nm or more and 450 nm or less, and it is configured as a linear light source or a planar surface light source using a UV lamp or UV LED.

The active energy ray irradiation device 60 is preferably capable of irradiating active energy rays with a peak intensity of 500 mW/cm² or more and 5000 mW/cm² or less, more preferably 1500 mW/cm² or more and 5000 mW/cm² or less, since this helps to suppress the curing shrinkage of an active energy ray curable liquid 20, thereby enhancing dimensional stability. In addition, the cumulative light amount can be adjusted by setting the irradiation time.

The active energy ray irradiation device 60 is arranged to be either movable or fixed with respect to an object to be coated. The active energy ray irradiation device 60 may be positioned behind the dispenser 50 in the direction of movement, allowing the liquid to be cured as it is being applied by the dispenser 50.

The control device integrates and controls the application device, the bonding device (demolding device), the XYZ-axis drive device, and the active energy ray irradiation device 60. For example, the control device controls the rotational speed (rotational frequency, rotation angle) of the pump to adjust the amount dispensed by the dispenser 50. The control device also controls the rotational speed (rotation angle) of the reversing drive unit to adjust the bonding load and push-in amount, thereby controlling the load or position of the movable table. Additionally, the control device controls the position and speed of the dispenser 50 by driving each moving unit of the XYZ-axis drive device and controls the power supply to the active energy ray irradiation device 60 to adjust the irradiation output of the light sources.

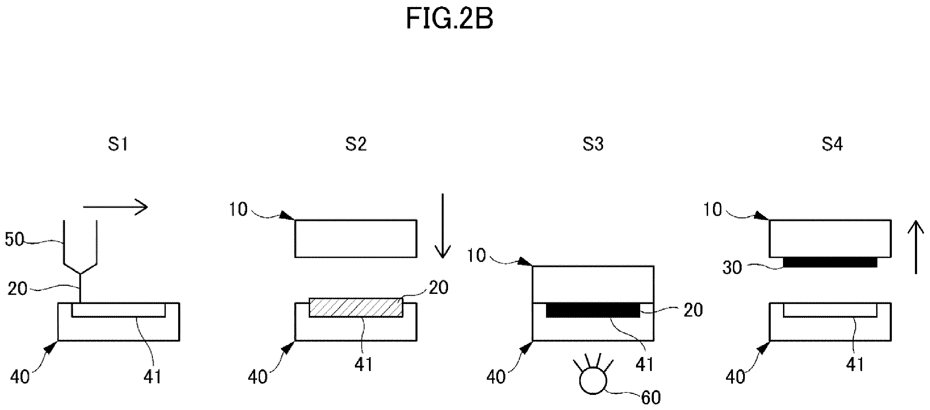

Next, the gasket forming method for molding the gasket 30 on the workpiece 10 using the active energy ray curable liquid 20 will be described. FIG. 2A is a flowchart illustrating the gasket forming method according to the embodiment. FIG. 2B is a diagram illustrating the operation of the gasket forming method.

The active energy ray curable liquid 20 is a UV-curable resin that reacts and cures when irradiated with active energy rays (e.g., UV light). The active energy ray curable liquid 20 may include, for example, a (meth)acrylate composition that undergoes radical polymerization or an epoxy composition that undergoes cationic polymerization.

Incidentally, the term "liquid" as used herein means being in a liquid state at 25°C. The viscosity of the active energy ray curable liquid 20 at 25°C is not particularly limited; however, it may be, for example, 500 Pa·s or less, preferably 0.01 Pa·s or more and 400 Pa·s or less, more preferably 0.1 Pa·s or more and 350 Pa·s or less, and particularly preferably 1 Pa·s or more and 300 Pa·s or less. Likewise, the structural viscosity ratio of the active energy ray curable liquid 20 at 25°C is not particularly limited; however, it may be, for example, 1.0 or more and 10 or less, preferably 1.1 or more and 8 or less, more preferably 1.3 or more and 7 or less, and particularly preferably 2.0 or more and 6 or less. The active energy ray curable liquid 20 may be even more suitable for the gasket forming method of the embodiment when its viscosity or structural viscosity ratio falls within the above ranges. The viscosity and structural viscosity ratio can be measured using a rheometer. Although not particularly limited, the curing shrinkage rate of the active energy ray curable liquid 20 is preferably, for example, 10% or less, and more preferably in the range of 2% to 10%.

Examples of the (meth)acrylate composition that undergoes radical polymerization include those containing a (meth)acryloyl group-containing oligomer, a (meth)acryloyl group-containing reactive diluent, and a photoradical initiator. Examples of the (meth)acryloyl group-containing oligomer include, but are not limited to, urethane (meth)acrylate with a polycarbonate backbone, urethane (meth)acrylate with a polyether backbone, urethane (meth)acrylate with a polyester backbone, urethane (meth)acrylate with a castor oil backbone, urethane (meth)acrylate with a polybutadiene backbone, urethane (meth)acrylate with a hydrogenated polybutadiene backbone, polyisobutylene-based (meth)acrylate, silicone-based (meth)acrylate, isoprene-based (meth)acrylate, hydrogenated isoprene-based (meth)acrylate, and (meth)acrylic group-containing acrylic polymer; of these, polyisobutylene-based (meth)acrylate is preferred. Examples of the (meth)acryloyl group-containing reactive diluent include, but are not limited to, ethyl (meth)acrylate, n-butyl (meth)acrylate, tert-butyl (meth)acrylate, isobutyl methacrylate, 2-ethylhexyl (meth)acrylate, isodecyl (meth)acrylate, glycidyl (meth)acrylate, lauryl (meth)acrylate, stearyl (meth)acrylate, tetrahydrofurfuryl (meth)acrylate, cyclohexyl (meth)acrylate, t-butylcyclohexyl (meth)acrylate, trimethylcyclohexyl (meth)acrylate, dicyclopentanyl (meth)acrylate, dicyclopentenyl (meth)acrylate, dicyclopentenyloxy (meth)acrylate, isobornyl (meth)acrylate, adamantyl (meth)acrylate, benzyl (meth)acrylate, phenyl (meth)acrylate, phenoxyethyl (meth)acrylate, nonylphenoxyethyl (meth)acrylate, butoxyethyl (meth) acrylate, 2-hydroxyethyl (meth)acrylate, 2-hydroxypropyl (meth)acrylate, 4-hydroxybutyl (meth)acrylate, acryloylmorpholine, morpholinoethyl (meth)acrylate, dimethylaminoethyl (meth)acrylate, diethylaminoethyl (meth)acrylate, N,N-dimethylaminoethyl (meth)acrylate, and N,N-dimethylaminopropyl (meth) acrylate. Examples of the photoradical initiator include, but are not limited to, acetophenone-based photoradical polymerization initiators, benzoin-based photoradical polymerization initiators, benzophenone-based photoradical polymerization initiators, thioxanthone-based photoradical polymerization initiators, acylphosphine oxide-based photoradical polymerization initiators, and titanocene-based photoradical polymerization initiators.

Examples of the epoxy composition that undergoes cationic polymerization include those containing a cationically polymerizable compound and a photocationic initiator. Examples of the cationically polymerizable compound include, but are not limited to, epoxy resins, alicyclic epoxy resins, oxetane compounds, and vinyl ether compounds. Examples of the photocationic initiator include, but are not limited to, onium salts such as aromatic iodonium salts and aromatic sulfonium salts.

A thixotropic agent may be added to the active energy ray curable liquid 20 in order to impart thixotropy thereto. Examples of the thixotropic agent include, but are not limited to, silica, amide wax, and hydrogenated castor oil; among these, silica is preferred.

Examples of the silica mentioned above include hydrophilic silica and hydrophobic silica. The hydrophobic silica may be a silica that has been treated to be hydrophobic with organochlorosilanes, polyorganosiloxane, hexamethyldisilazane, or the like.

The gasket forming method of the embodiment includes an application step S1, a bonding step S2, a curing step S3, and a demolding step S4, which are performed in this order.

In the application step S1, first, the dispenser 50 applies the active energy ray curable liquid 20 into a cavity 41 of a forming mold 40 (described later) in a desired gasket shape, while moving along, for example, a unicursal or single-stroke trajectory.

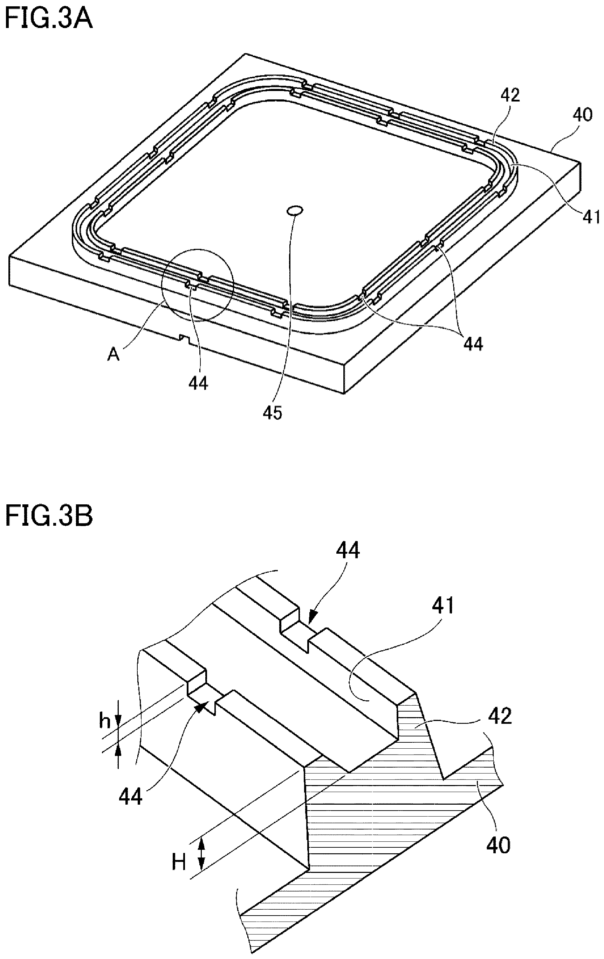

Described below is the forming mold 40. FIG. 3A is a schematic perspective view of the forming mold 40 of the embodiment. FIG. 3B is an enlarged cross-sectional perspective view of an area A in FIG. 3A.

The forming mold 40 is held on the fixed table of the bonding device and includes the cavity 41 having a shape corresponding to the gasket 30 to be molded. The cavity 41 may have a circular, elliptical, or rectangular ring shape, for example. However, the cavity 41 may also have any shape, including a closed shape where a trajectory does not overlap another trajectory, such as a single-stroke trajectory, or a closed shape where a trajectory overlaps another trajectory.

The forming mold 40 is made of a transparent material that allows light to pass therethrough; for example, it may be made of one or more materials selected from the group consisting of polymethyl methacrylate, cycloolefin polymer, polycarbonate, and glass.

Referring back to FIG. 2A, the description of the application step S1 is continued. In the application step S1, the dispenser 50 may dispense the active energy ray curable liquid 20 in an amount equal to or greater than 100% of the volume of the cavity 41 so that the liquid 20 slightly overflows from the cavity 41. Specifically, the dispensing amount per unit length may be set to 100% or more of the volume per unit length. The upper limit for the dispensing amount may be approximately 110%.

Next, in the bonding step S2, the movable table of the bonding device which holds the workpiece 10 is reversed so as to face the fixed table which holds the forming mold 40 coated with the active energy ray curable liquid 20. The forming mold 40 and the workpiece 10 are then bonded together with the uncured active energy ray curable liquid 20 interposed between them.

At this time, the forming mold 40 and the workpiece 10 are bonded at a bonding load of 1 MPa or less. The bonding load may be applied along with pressure control by measuring the bonding pressure (clamping force), or it may be applied along with position control by measuring the bonding amount (push-in amount). In this manner, the forming mold 40 and the workpiece 10 can be bonded at a low load to form the gasket 30, thereby reducing the load on the workpiece 10.

Subsequently, in the curing step S3, the active energy ray curable liquid 20 interposed between the forming mold 40 and the workpiece 10 is cured by irradiation with active energy rays emitted from the active energy ray irradiation device 60.

The active energy ray irradiation device 60 is located on the side opposite to the molding/bonding surface of the forming mold 40 where the cavity 41 is formed. The irradiated active energy rays pass through the transparent forming mold 40 and reach the active energy ray curable liquid 20. Incidentally, if the workpiece 10 is transparent, the active energy rays may be irradiated from the workpiece 10 side toward the forming mold 40.

In the demolding step S4, the bonding device, functioning as the demolding device, reverses the movable table to separate it from the fixed table so that the cured active energy ray curable liquid 20 (as the gasket 30) is pulled out of (the cavity 41 of) the forming mold 40 together with the workpiece 10.

After that, the workpiece 10 is removed from the movable table, and a molding step S10 is completed. Thus, the workpiece 10 can be obtained with the gasket 30 formed directly on its surface.

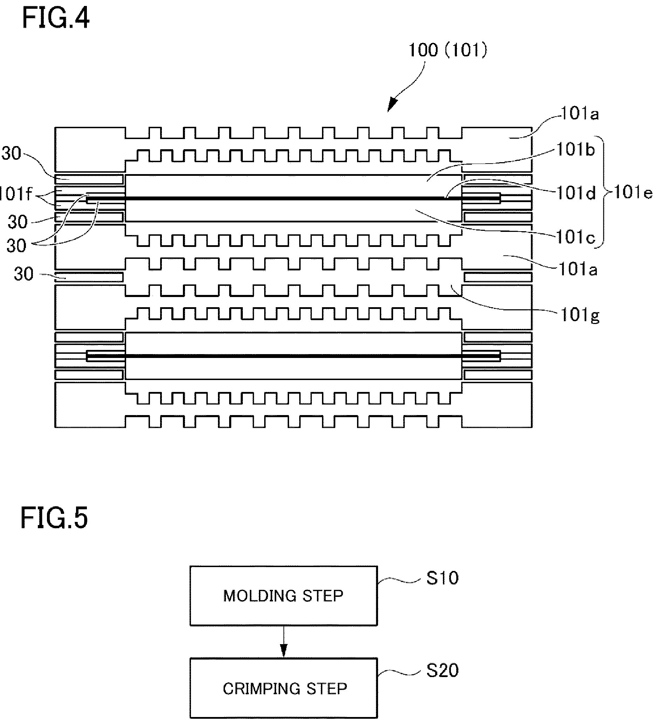

Described below is an example in which the gasket forming method of the embodiment is applied to a production method of a fuel cell 100 using a fuel cell component 101 as the workpiece 10 for forming the gasket 30. FIG. 4 is a schematic cross-sectional view of the fuel cell 100.

Examples of the fuel cell component 101 include a separator 101a, an electrolyte membrane 101d, a frame 101f, and an electrolyte membrane/electrode assembly 101e, which constitute (a cell of) the fuel cell 100 (see FIG. 4), and the gasket 30 is formed thereto.

Of these, it is preferable to form the gasket 30 on the separator 101a, which is made of aluminum, stainless steel, titanium, graphite, carbon, or the like. FIG. 4 also illustrates a fuel electrode 101b, an air electrode 101c, and a cooling water passage 101g.

The production method of the fuel cell 100 includes: an application step S1 of applying the active energy ray curable liquid 20 into the cavity 41 of the forming mold 40; a bonding step S2 of bonding the forming mold 40 coated with the active energy ray curable liquid 20 and the fuel cell component 101; a curing step S3 of curing the applied active energy ray curable liquid 20 by irradiation with active energy rays; and a demolding step S4 of removing the cured active energy ray curable liquid 20 from the forming mold 40 together with the fuel cell component 101, which are performed in this order.

Described below is another example in which the gasket forming method of the embodiment is applied to a sealing method for sealing between two components. FIG. 5 is a flowchart illustrating the sealing method for sealing between two components.

The sealing method for sealing between two components includes a molding step S10 of molding the gasket 30 on one component (e.g., the workpiece 10 described above) and a crimping step S20 of crimping or pressure-bonding the one component and the other component.

The molding step S10 is performed as in the gasket forming method described above; therefore, the description thereof is omitted.

In the crimping step S20, the other component is placed on the gasket 30 molded on the one component, and the one component and the other component are crimped (pressure-bonded) together. In the crimping step S20, a crimping device such as the bonding device used in the bonding step S2 may be used, and position control or pressure control may be performed. If the two components are those that are fastened and secured together with a screw (bolt), they may be screwed together, or they may be joined together by riveting.

The sealing method is applicable not only to the fuel cell 100 described above, but also to relatively small components such as the main seal of a liquid crystal display (LCD) panel.

Returning now to FIG. 3A, the forming mold 40 will be described.

The cavity 41 is formed in the surface of the forming mold 40 (hereinafter referred to as the "molding/bonding surface")such that its cross-section has the same shape as the cross-section of the desired gasket 30, such as substantially rectangular, trapezoidal, triangular (mountain-shaped), semicircular, or the like. The cross-section of the cavity 41 may have a depth H greater than its width or, conversely, a width greater than its depth.

The cavity 41 is annularly closed so as to partition between the inner region and the outer region. The cavity 41 does not necessarily need to be formed of a single ring; for example, it may include a combination of a plurality of annular shapes, such as a B-shape.

The cavity 41 is located in a protruding portion 42 that protrudes in the normal direction of the molding/bonding surface relative to the partitioned inner and outer regions. The protruding portion 42 may have a projected area such that the proportion of the projected area of the cavity 41, when projected from above, falls within a range of 30% to 99%. The surface (molding/bonding surface) of the protruding portion 42 is located on the same plane, except for the cavity 41.

The inner region defined by the cavity 41 is provided with an air hole 45 that can communicate with the atmosphere.

In addition, as illustrated in FIG. 3B, the forming mold 40 includes one or more communication passages 44 in communication with both the cavity 41 and the atmosphere. The communication passages 44 are configured to allow a portion of the active energy ray curable liquid 20 or gas (such as air trapped between the workpiece 10 and the forming mold 40, or gas generated by outgassing during curing) to be discharged when the workpiece 10 and the molding/bonding surface of the forming mold 40 (the surface of the protruding portion 42) are bonded together through the active energy ray curable liquid 20.

The communication passages 44 are each shaped as a groove recessed from the molding/bonding surface of the protruding portion 42 and have a depth h. The communication passages 44 may also be, for example, through holes that penetrate the walls of the protruding portion 42 and communicate with the cavity 41. For example, the depth (height) h of the communication passages 44 may be smaller than the depth H of the cavity 41; for example, it may be 5% or more and 20% or less of the depth H of the cavity 41.

Each of the communication passages 44 may be located in a linear portion of the cavity 41, rather than in a curved portion. Additionally, each of the communication passages 44 may also be located in a linear portion of the protruding portion 42.

The molding/bonding surface of the protruding portion 42, as well as the surfaces of the cavity 41 and the communication passages 44, may be subjected to a surface treatment, such as a fluorine coating, to improve releasability so that the cured active energy ray curable liquid 20 (gasket 30) can be easily removed therefrom in the demolding step S4.

In the following, the forming mold 40 according to a modified embodiment will be described. FIG. 6 is a cross-sectional perspective view of the forming mold 40 according to this modified embodiment.

The forming mold 40 of the above embodiment has only the communication passages 44. On the other hand, the forming mold 40 of the modified embodiment additionally includes a clearance groove 43, which enables the gasket 30 to be formed to the height of the design value even when the active energy ray curable liquid 20 is applied in an amount of about 110% of the volume of the cavity 41.

The clearance groove 43 is in communication with the open end side of the cavity 41. The clearance groove 43 has a width greater than that of the cavity 41 and a depth h2 smaller than the depth H of the cavity 41. For example, the depth h2 of the clearance groove 43 may be 5% or more and 20% or less of the depth H of the cavity 41. Although the depth h2 of the clearance groove 43 is preferably equal to or greater than the depth h of the communication passages 44, it may also be smaller than the depth h.

The clearance groove 43 may be provided along the entire circumference of the cavity 41, or it may be arranged intermittently or locally. When the clearance groove 43 is provided locally, it is preferable to position it in a linear portion of the annular cavity 41, avoiding the curved portions.

When the forming mold 40 is provided with the clearance groove 43, the clearance groove 43 is sealed along with the cavity 41 when the workpiece 10 is bonded to the forming mold 40. As a result, after the gasket 30 is molded, the active energy ray curable liquid 20 that has overflowed into the clearance groove 43 is also cured, forming a burr that is integral with the gasket 30. However, since the height of the gasket 30 is maintained at H (mm), the sealing performance of the gasket 30 remains unaffected, and the burr may or may not be removed.

As described above, the cavity 41 is located in the protruding portion 42 that protrudes in the normal direction of the molding/bonding surface relative to the annular inner and outer regions. Accordingly, the clearance groove 43 is also located in the protruding portion 42. In this case as well, the protruding portion 42 may have a projected area such that the proportion of the projected area of the cavity 41 and the clearance groove 43, when projected from above, falls within a range of 30% to 99%.

In addition, the molding/bonding surface of the protruding portion 42, as well as the surfaces of the cavity 41, the clearance groove 43, and the communication passages 44, may be subjected to a surface treatment, such as a fluorine coating, to improve releasability.

Furthermore, the communication passages 44 may not communicate directly with the cavity 41; instead, they may communicate indirectly with the cavity 41 through the clearance groove 43.

As described above, according to an embodiment, a gasket forming method is a method for forming a gasket (30) on a workpiece (10). The gasket forming method includes: an application step S1 of applying the active energy ray curable liquid 20 to the cavity 41 of the transparent forming mold 40; a bonding step S2 of bonding the forming mold 40 coated with the active energy ray curable liquid 20 and the workpiece 10; a curing step S3 of curing the applied active energy ray curable liquid 20 by irradiation with active energy rays; and a demolding step S4 of removing the cured active energy ray curable liquid 20 from the forming mold 40 together with the workpiece 10, which are performed in this order. In the bonding step S2, when the workpiece 10 and the forming mold 40 are bonded together through the active energy ray curable liquid 20, a portion of the active energy ray curable liquid 20 or gas is discharged into the atmosphere from the communication passages 44 that are in communication with the cavity 41.

In the embodiment, a gasket forming mold (40) is configured to form a gasket (30) on a workpiece (10) by applying, curing, and transferring an active energy ray curable liquid (20). The gasket forming mold 40 includes the cavity 41 that is annularly closed according to the shape of the gasket 30. The cavity 41 is located on the molding/bonding surface of the forming mold 40 and can be filled with the active energy ray curable liquid 20. The gasket forming mold 40 further includes the communication passages 44 that are in communication with the cavity 41 and the atmosphere. The communication passages 44 allow a portion of the active energy ray curable liquid 20 or gas to be discharged therefrom when the workpiece 10 and the molding/bonding surface are bonded together through the active energy ray curable liquid 20.

As a result, even if the active energy ray curable liquid 20 overflows from the cavity 41, it can be discharged to the outside of the forming mold 40 without seeping between the workpiece 10 and the molding/bonding surface of the forming mold 40. Thus, the workpiece 10 comes into direct contact with the molding/bonding surface of the forming mold 40 to close (seal) the cavity 41. This allows the gasket 30 to be formed to a height corresponding to the depth H of the cavity 41, thereby stabilizing the dimensions of the gasket 30.

In addition, when the gasket 30 is removed from the forming mold 40, discontinuous protruding portions are formed along the outer or inner periphery of the gasket 30 due to the communication passages 44, allowing air to easily enter between the gasket 30 and the forming mold 40. As a result, the required demolding force can be reduced, facilitating the demolding process.

Furthermore, typically, when the active energy ray curable liquid 20 is cured with the forming mold 40 and the workpiece 10 bonded together, it cures while being pulled by the surface of the cavity 41 and the surface of the workpiece 10, which causes the cured gasket 30 to be affected by curing shrinkage. The curing shrinkage is particularly prominent at curved or bent portions of the gasket 30, such as corners, rather than at straight portions. However, in this embodiment, since the workpiece 10 and the cavity 41 are not completely sealed due to the presence of the communication passages 44, the curing shrinkage of the active energy ray curable liquid 20 can be suppressed. This contributes to the uniform dimensional accuracy of the gasket 30 and helps to reduce variation.

According to a modified embodiment, a gasket forming method is a method for forming a gasket (30) on a workpiece (10). The gasket forming method includes: an application step S1 of applying the active energy ray curable liquid 20 to the cavity 41 of the transparent forming mold 40; a bonding step S2 of bonding the forming mold 40 coated with the active energy ray curable liquid 20 and the workpiece 10; a curing step S3 of curing the applied active energy ray curable liquid 20 by irradiation with active energy rays; and a demolding step S4 of removing the cured active energy ray curable liquid 20 from the forming mold 40 together with the workpiece 10, which are performed in this order. The forming mold 40 includes the clearance groove 43 that is closed together with the cavity 41 when the workpiece 10 and the forming mold 40 are bonded together through the active energy ray curable liquid 20. The clearance groove 43 has a width greater than the width of the cavity 41 and a depth h2 smaller than the depth H of the cavity 41. The clearance groove 43 is in communication with the open end side of the cavity 41.

In the modified embodiment, a gasket forming mold (40) is configured to form a gasket (30) on a workpiece (10) by applying, curing, and transferring an active energy ray curable liquid (20). The gasket forming mold 40 includes the cavity 41 that is annularly closed according to the shape of the gasket 30. The cavity 41 is located on the molding/bonding surface of the forming mold 40 and can be filled with the active energy ray curable liquid 20. The gasket forming mold 40 further includes the clearance groove 43 that is closed together with the cavity 41 when the workpiece 10 and the forming mold 40 are bonded together through the active energy ray curable liquid 20. The clearance groove 43 has a width greater than the width of the cavity 41 and a depth h2 smaller than the depth H of the cavity 41. The clearance groove 43 is in communication with the open end side of the cavity 41.

As a result, the active energy ray curable liquid 20 that overflows from the cavity 41 does not seep between the workpiece 10 and the molding/bonding surface of the forming mold 40. Thus, the workpiece 10 comes into direct contact with the molding/bonding surface of the forming mold 40 to close (seal) the cavity 41 and the clearance groove 43. This allows the gasket 30 to be formed to a height corresponding to the depth H of the cavity 41, thereby stabilizing the dimensions of the gasket 30.

In some embodiments, the cavity 41 of the forming mold 40 is located in the protruding portion 42 that protrudes in the normal direction of the molding/bonding surface of the forming mold 40 relative to the annular inner and outer regions. Consequently, in the bonding step S2, a pressing force (clamping force) is applied only to the periphery of the cavity 41, thereby increasing the pressing force per unit area and achieving a uniform application. Additionally, compared to pressing the entire surface of the forming mold 40, the overall pressing force can be reduced, and the adjustment of the pressing force can be facilitated. Furthermore, damage to the workpiece 10 caused by the pressing force can be reduced.

In some embodiments, the application step S1 is performed using the dispenser 50. This makes it easier to control the amount of liquid dispensed in the application step S1. For example, if the dispenser 50 applies the liquid in a single-stroke trajectory, no overlapping portions occur where application paths intersect. As a result, the position and speed control of the dispenser 50 can be simplified. In addition, the gasket 30 can be molded under low pressure using the active energy ray curable liquid 20.

In some embodiments, the cavity 41 of the forming mold 40 is coated with a release coating, allowing the molded gasket 30 to be easily removed from the cavity 41 of the forming mold 40.

According to an embodiment, the fuel cell 100 includes the gasket 30 obtained by the gasket molding method described above, and the fuel cell component 101 serves as the workpiece 10. The fuel cell component 101 is selected from the group consisting of the separator 101a, the electrolyte membrane 101d, the frame 101f, and the electrolyte membrane/electrode assembly 101e.

According to an embodiment, a production method of the fuel cell 100 includes: an application step S1 of applying the active energy ray curable liquid 20 into the cavity 41 of the forming mold 40; a bonding step S2 of bonding the forming mold 40 coated with the active energy ray curable liquid 20 and the fuel cell component 101; a curing step S3 of curing the applied active energy ray curable liquid 20 by irradiation with active energy rays; and a demolding step S4 of removing the cured active energy ray curable liquid 20 from the forming mold 40 together with the fuel cell component 101.

In this manner, the gasket forming method can be applied to the production method of the fuel cell 100. Furthermore, in the gasket forming method of the embodiment, molding can be performed under low pressure, and the gasket 30 can be formed by bonding with low load. As a result, the load on the fuel cell component 101 can be reduced.

According to an embodiment, a sealing method is a method for sealing between two components. The sealing method includes: a molding step S10 of molding the gasket 30 on one component by the gasket forming method described above; and a crimping step S20 of placing the other component on the gasket 30 molded on the one component and crimping the one component and the other component together. In this manner, the gasket forming method can also be applied to the sealing method.

Although specific embodiments of the invention have been described and illustrated, it should be understood that the invention is not limited to the embodiments disclosed herein. Various changes, modifications, and alterations may be made within the scope of the invention as defined by the appended claims.

### (Modification)

In the above embodiments, the curing step S3 is a single step in which the active energy ray curable liquid 20 is irradiated with active energy rays from the active energy ray irradiation device 60 until it is completely cured. However, curing may alternatively be performed in two steps, including: a provisional curing step in which part of the active energy ray curable liquid 20 is cured to an extent sufficient to maintain shape stability; followed by a demolding step S4 in which the provisionally cured liquid 20 is removed from the forming mold 40 together with the workpiece 10, and a main curing step in which the liquid 20 is fully cured by reirradiation with active energy rays.

In this case, in the provisional curing step S3, the applied active energy ray curable liquid 20 may be irradiated with active energy rays having a wavelength of, for example, 320 nm or more and 450 nm or less and a peak intensity of 500 mW/cm² or more and 5000 mW/cm² or less at a cumulative light amount (e.g., 100 mJ/cm² or more and 500 mJ/cm² or less) that achieves a reaction rate of 20% or more and 85% or less as calculated from the IR spectrum. In the main curing step, the active energy rays may be irradiated at a cumulative light amount (e.g., 1000 mJ/cm² or more and 10000 mJ/cm² or less) that achieves a reaction rate of more than 85% and up to 100% as calculated from the IR spectrum.

### [List of Reference Signs]

- 10: Workpiece
- 10a: Opening
- 10b: Recess
- 20: Active energy ray curable liquid
- 30: Gasket
- 40: Forming mold
- 41: Cavity
- 42: Land portion (protruding portion)
- 43: Clearance groove
- 44: Communication passage
- 45: Air hole
- 50: Dispenser
- 60: Active energy ray irradiation device
- 100: Fuel cell
- 101: Fuel cell component
- 101a: Separator
- 101b: Fuel electrode
- 101c: Air electrode
- 101d: Electrolyte membrane
- 101e: Electrolyte membrane/electrode assembly
- 101f: Frame
- 101g: Cooling water passage

## Claims

1. A gasket forming method for forming a gasket on a workpiece, the method comprising, in the order recited:
an application step of applying an active energy ray curable liquid to an annular cavity of a transparent forming mold;
a bonding step of bonding the forming mold coated with the active energy ray curable liquid and the workpiece;
a curing step of curing the applied active energy ray curable liquid by irradiation with an active energy ray; and
a demolding step of removing the cured active energy ray curable liquid from the forming mold together with the workpiece, wherein,
in the bonding step, when the workpiece and the forming mold are bonded together through the active energy ray curable liquid, a portion of the active energy ray curable liquid or gas is discharged into atmosphere from a communication passage that is in communication with the cavity.

2. The gasket forming method according to claim 1, wherein
the forming mold includes a clearance groove that is closed together with the cavity when the workpiece and the forming mold are bonded together through the active energy ray curable liquid,
the clearance groove has a width greater than that of the cavity and a depth smaller than that of the cavity, and
the clearance groove is in communication with an open end side of the cavity.

3. A gasket forming method for forming a gasket on a workpiece, the method comprising, in the order recited:
an application step of applying an active energy ray curable liquid to an annular cavity of a transparent forming mold;
a bonding step of bonding the forming mold coated with the active energy ray curable liquid and the workpiece;
a curing step of curing the applied active energy ray curable liquid by irradiation with an active energy ray; and
a demolding step of removing the cured active energy ray curable liquid from the forming mold together with the workpiece, wherein,
the forming mold includes a clearance groove that is closed together with the cavity when the workpiece and the forming mold are bonded together through the active energy ray curable liquid,
the clearance groove has a width greater than that of the cavity and a depth smaller than that of the cavity, and
the clearance groove is in communication with an open end side of the cavity.

4. The gasket forming method according to any one of claims 1 to 3, wherein the cavity is located in a protruding portion that protrudes in a normal direction of a molding/bonding surface of the forming mold relative to annular inner and outer regions.

5. The gasket forming method according to claim 1 or 3, wherein the application step is performed using a dispenser.

6. The gasket forming method according to claim 1 or 3, wherein the cavity is coated with a release coating.

7. A gasket forming mold configured to form a gasket on a workpiece by applying, curing, and transferring an active energy ray curable liquid, the mold comprising:
a molding/bonding surface;
a cavity that is annularly closed according to a shape of the gasket, wherein the cavity is located on the molding/bonding surface and can be filled with the active energy ray curable liquid; and
a communication passage that is in communication with the cavity and atmosphere, wherein the communication passage allows a portion of the active energy ray curable liquid or gas to be discharged therefrom when the workpiece and the molding/bonding surface are bonded together through the active energy ray curable liquid.

8. The gasket forming mold according to claim 7, further comprising a clearance groove having a width greater than that of the cavity and a depth smaller than that of the cavity, wherein
the clearance groove is in communication with an open end side of the cavity, and
the clearance groove is closed together with the cavity when the workpiece and the molding/bonding surface are bonded together through the active energy ray curable liquid.

9. A gasket forming mold configured to form a gasket on a workpiece by applying, curing, and transferring an active energy ray curable liquid, the mold comprising:
a molding/bonding surface;
a cavity that is annularly closed according to a shape of the gasket, wherein the cavity is located on the molding/bonding surface and can be filled with the active energy ray curable liquid; and
a clearance groove that is closed together with the cavity when the workpiece and the forming mold are bonded together through the active energy ray curable liquid, wherein
the clearance groove has a width greater than that of the cavity and a depth smaller than that of the cavity, and
the clearance groove is in communication with an open end side of the cavity.

10. The gasket forming mold according to any one of claims 7 to 9, wherein the cavity is located in a protruding portion that protrudes in a normal direction of the molding/bonding surface relative to annular inner and outer regions.

11. The gasket forming mold according to claim 7 or 9, wherein the cavity is coated with a release coating.

12. A gasket forming device, comprising:
an application device that ejects an active energy ray curable liquid using a dispenser;
a bonding device that includes a transparent forming mold and bonds a workpiece to the forming mold;
a drive device that moves the forming mold and the dispenser relative to each other; and
an active energy ray irradiation device that irradiates the active energy ray curable liquid with an active energy ray,
wherein the forming mold comprises:
a molding/bonding surface;
a cavity that is annularly closed according to a shape of a gasket, wherein the cavity is located on the molding/bonding surface and can be filled with the active energy ray curable liquid; and
a communication passage that is in communication with the cavity and atmosphere, wherein the communication passage allows a portion of the active energy ray curable liquid or gas to be discharged therefrom when the workpiece and the molding/bonding surface are bonded together through the active energy ray curable liquid.

13. A gasket forming device, comprising:
an application device that ejects an active energy ray curable liquid using a dispenser;
a bonding device that includes a transparent forming mold and bonds a workpiece to the forming mold;
a drive device that moves the forming mold and the dispenser relative to each other; and
an active energy ray irradiation device that irradiates the active energy ray curable liquid with an active energy ray,
wherein the forming mold comprises:
a molding/bonding surface;
a cavity that is annularly closed according to a shape of a gasket, wherein the cavity is located on the molding/bonding surface and can be filled with the active energy ray curable liquid; and
a clearance groove that is closed together with the cavity when the workpiece and the forming mold are bonded together through the active energy ray curable liquid, wherein
the clearance groove has a width greater than that of the cavity and a depth smaller than that of the cavity, and
the clearance groove is in communication with an open end side of the cavity.
